(19) Europäisches Patentamt / European Patent Office / Office européen des brevets

(11) **EP 4 442 880 B1**

(12) **EUROPEAN PATENT SPECIFICATION**

(45) Date of publication and mention of the grant of the patent:
**15.07.2026 Bulletin 2026/29**

(21) Application number: **23166509.2**

(22) Date of filing: **04.04.2023**

(51) International Patent Classification (IPC):
**D04H 1/4242** *(2012.01)*   **D04H 1/4274** *(2012.01)*
**D04H 1/587** *(2012.01)*   **D04H 1/60** *(2006.01)*
**B29C 70/16** *(2006.01)*

(52) Cooperative Patent Classification (CPC):
**D04H 1/4242; B29C 70/003; B29C 70/16;**
**D04H 1/4274; D04H 1/587; D04H 1/60**

(54) **OPTIMIZED PROCESS FOR THE PRODUCTION OF COMPOSITES FROM RECYCLED CARBON FIBERS AND THERMOPLASTIC MATRIX**

OPTIMIERTES VERFAHREN ZUR HERSTELLUNG VON VERBUNDSTOFFEN AUS RECYCELTEN KOHLENSTOFFFASERN UND THERMOPLASTISCHER MATRIX

PROCÉDÉ OPTIMISÉ POUR LA PRODUCTION DE COMPOSITES À PARTIR DE FIBRES DE CARBONE RECYCLÉES ET MATRICE THERMOPLASTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**09.10.2024 Bulletin 2024/41**

(73) Proprietors:
• **Fraunhofer-Gesellschaft zur Förderung der angewandten Forschung e.V.**
**80686 München (DE)**
• **Asahi Kasei Corporation**
**Tokyo (JP)**

(72) Inventors:
• **MANIS, Frank**
**86159 Augsburg (DE)**
• **THEISS, Julian**
**86159 Augsburg (DE)**
• **KIMURA, Shunta**
**Kawasaki-city (JP)**
• **MORI, Yuki**
**Kawasaki-city (JP)**

(74) Representative: **Maiwald GmbH**
**Elisenhof**
**Elisenstraße 3**
**80335 München (DE)**

(56) References cited:
**WO-A1-2017/055339    US-A1- 2012 077 402**

## Description

### Technical field

The present invention relates to a process to obtain a semi-finished product comprising recycled carbon fibers and a thermoplastic matrix comprising a thermoplastic polyamide, the obtained semi-finished product and uses thereof in the production of composites.

### Background

Carbon fibers are composed primarily of carbon atoms. Although the production of carbon fibers is quite cost intensive, they have found broad applications across the world because of their several highly sought after characteristics like high stiffness, high tensile strength, high strength to weight ratio, high chemical resistance, high-temperature tolerance, and low thermal expansion.

Consequently, the amount of waste material containing carbon fibers increases steadily. In order to recycle these valuable fibers, the respective waste material is usually comminuted and the fibers reclaimed from the composite material using pyrolysis or solvolysis.

Another source of recycled carbon fibers are off-cuts from semi-finished textiles. Those are shortened to a desired length for the respective application. The discontinuous waste carbon fiber obtained as cutting waste can then also be fed into a process to reuse the carbon fibers.

The recycled or cutting waste carbon fibers (rCF) can be fabricated into a nonwoven fabric.

This nonwoven fabric containing recycled carbon fibers, however, possesses different and mostly inferior fabric properties compared to nonwoven fabric containing virgin carbon fibers.

This is mainly due to the obtained randomly oriented, discontinuous carbon fibers resulting from the comminution of carbon fiber containing waste material or cutting of virgin fibers. Typical recycling methods such as solvolysis or pyrolysis also lead to the removal of the carbon fibers sizing, leading to inferior protection of the fiber.

Especially processing these nonwoven fabrics containing recycled carbon fibers into a semi-finished product with a thermoplastic matrix is historically difficult and problems like lofting of the nonwoven fabric causes oxidation of the polymer during consolidation, leading to inferior impregnation of the semi-finished products.

Usually, a thermoplastic polymer fiber is processed into the nonwoven fabric containing recycled carbon fibers, which forms the thermoplastic matrix after consolidation of the respective nonwoven fabric. This can lead to inhomogeneous distribution of the thermoplastic polymer in the semi-finished product and limits the usable thermoplastic polymers to polymers that can be spinned into fibers.

US Patent application US 2012/0077402 A1 discloses a method for manufacturing a semi-finished textile product, particularly a prepreg, from carbon fibers preimpregnated with a matrix material, including the steps of manufacturing nonwoven fabric having at least 10% carbon fibers and/or a fleece having at least 10% carbon fibers.

Therefore, a process to obtain semi-finished products containing recycled carbon fibers and a thermoplastic polymer with good properties and that allows high quantity production of semi-finished products that can be used to manufacture composites is needed.

After thorough research in this field, it was now surprisingly found, that a nonwoven fabric comprising recycled carbon fibers can be processed into a recycled carbon fiber-reinforced semi-finished product by utilizing the powder impregnation method to dispose a thermoplastic polyamide powder onto the nonwoven fabric before consolidating the nonwoven fabric into the respective semi-finished product.

The obtained recycled carbon fibers reinforced semi-finished product showed excellent homogeneity demonstrated by the very small difference in fiber volume fraction at different points in the semi-finished product.

### Summary of the Invention

The present invention relates to a process to obtain a recycled carbon fiber-reinforced semi-finished product comprising the following steps

    a) providing a nonwoven fabric comprising recycled carbon fibers;
    b) uniformly disposing a polymer powder comprising a thermoplastic polyamide onto the nonwoven fabric comprising recycled carbon fibers; and
    c) consolidating the nonwoven fabric obtained in step b) to obtain a fiber-reinforced semi-finished product,

characterized in that the consolidation in step c) is performed at a temperature in the range of 230 °C to 330 °C, and at a pressure in the range of 5 to 60 bar.

In another aspect, the invention relates to a recycled carbon fiber-reinforced semi-finished product obtained by a process according to the present invention, the recycled carbon fiber-reinforced semi-finished product comprising a nonwoven fabric comprising recycled carbon fibers, and a thermoplastic matrix comprising a thermoplastic polyamide, characterized in that the semi-finished product

- has an average fiber volume fraction (aFVF) in the range of 5 to 50 vol.-%, preferably 10 to 40 vol.-%, more preferably of 17 to 30 vol.-% based on the total volume of the recycled carbon fiber-reinforced semi-finished product, obtained by determining the fiber volume fraction of n 10 mm x 20 mm samples taken from points at least 5 cm and at most 20 cm apart from each other in the recycled carbon fiber-reinforced semi-finished product and calculating the average fiber volume fraction (aFVF) according to the following formula (i):

$$aFVF = \frac{\sum_1^n FVF_n}{n} \qquad (i),$$

wherein n is the number of samples taken and n is $\geq 2$, preferably $\geq 4$, and $FVF_n$ is the fiber volume fraction of each sample n, and

- has a difference in fiber volume fraction ($\Delta FVF$) between any of the measured samples n ($FVF_n$) and the average fiber volume fraction (aFVF) calculated according to the following equation (ii):

$$\Delta FVF = FVF_n - aFVF \quad (ii)$$

of $\leq \pm 3$ vol.-%, preferably $\leq \pm 2$ vol.-%, more preferably $\leq \pm 1.5$ vol.-%.

In a further aspect, the invention relates to a process to obtain a composite that comprises the following steps

I) providing the inventive recycled carbon fiber-reinforced semi-finished product;
II) heating the recycled carbon fiber-reinforced semi-finished product; and
III) forming the heated recycled carbon fiber-reinforced semi-finished product into a composite.

Lastly, the invention relates to a composite comprising the inventive recycled carbon fiber-reinforced semi-finished product.

## Detailed Description of the Invention

The invention relates to a process for obtaining a recycled carbon fiber-reinforced semi-finished product, characterized in that the process comprises the following steps:

a) providing a nonwoven fabric comprising recycled carbon fibers;
b) uniformly disposing a polymer powder comprising a thermoplastic polyamide onto the nonwoven fabric comprising recycled carbon fibers; and
c) consolidating the nonwoven fabric obtained in step b) to obtain a fiber-reinforced semi-finished product,

characterized in that the consolidation in step c) is performed at a temperature in the range of 230 °C to 330 °C, and at a pressure in the range of 5 to 60 bar.

### Fiber-reinforced semi-finished products

Fiber-reinforced semi-finished products are known in the state of the art and consist of a polymer matrix that is reinforced with fibers. They are usually obtained in form of sheets.

### Nonwoven fabric comprising recycled carbon fibers

Recycling methods for carbon fibers are known in the state of the art. Usually, the respective waste material containing carbon fibers is comminuted and the fibers isolated from the rest of the waste material using pyrolysis or solvolysis.
The comminution of the waste material leads to the breakage of the oriented, continuous carbon fibers present in the waste material. Accordingly, the obtained recycled carbon fibers are randomly oriented, discontinuous carbon fibers. The length of these recycle carbon fibers is usually less than 180 mm.

Additionally, pyrolysis and solvolysis both lead to the removal of the sizing (unsized fiber) that is usually applied to carbon fibers.

Sizing of fibers is known in the state of the art. Thereby, a thin, homogenous coating is applied to the surface of the fibers during the manufacturing process. Sizing helps to protect the filaments from breaking during handling and processing and also during subsequent compounding and composite processing and improves the compatibility of the fiber in follow-up processes.

Due to their short length and random orientation, recycled carbon fibers cannot be woven into woven fabrics but can be processed into nonwoven fabrics.

Processes to obtain nonwoven fabrics are known in the state of the art. Examples of processes to obtain a nonwoven fabric are the wet laid process and the dry laid process.

The nonwoven fabric comprising recycled carbon fibres used in the inventive process preferably has one or more of the following characteristics.

The length of the recycled carbon fibers is preferably in the range of 20 mm to 180 mm, more preferably 25 mm to 150 mm, even more preferably 30 to 100 mm.

The nonwoven fabric preferably comprises recycled carbon fibers in an amount of 80 to 100 wt.-%, more preferably 90 to 100 wt.-%, even more preferably 98 to 100 wt.-% based on the total weight of the nonwoven fabric.

The basis weight of the nonwoven fabric comprising recycled carbon fibers preferably is in the range of 50 g m$^{-2}$ to 250 g m$^{-2}$, more preferably of 75 g m$^{-2}$ to 150 g m$^{-2}$ and even more preferably of 90 g m$^{-2}$ to 110 g m$^{-2}$.

In one embodiment of the inventive process, the recycled carbon fibers of the nonwoven fabric are discontinuous.

In another one embodiment of the inventive process, the recycled carbon fibers of the nonwoven fabric are discontinuous and unsized.

Polymer powder comprising a thermoplastic polyamide

For the impregnation of the nonwoven fabric comprising recycled carbon fibers (rCF), as described above, a polymer powder comprising a thermoplastic polyamide is used.

Methods for obtaining polymer powders are known in the state of the art. For example, milling of the respective polymer can provide a suitable polymer powder. Further, it can be advantageous to use cryogenic milling to increase for example the brittleness of the polymer and facilitate the milling process of the polymer.

In order to achieve good impregnation and distribution of the polymer powder, it is preferred that the maximum grain size of the polymer powder comprising a thermoplastic polyamide is in the range of 1 $\mu$m to 1000 $\mu$m, preferably of 10 $\mu$m to 600 $\mu$m.

Since the inventive process uses a polymer powder comprising the thermoplastic polyamides, the suitable thermoplastic polyamide is not limited to polyamides that can be spun into a fiber. Accordingly, polyamides having a low viscosity and/or low molecular weight can be used as the thermoplastic polyamide.

Thermoplastic describes the characteristic of plastic polymer materials that become moldable at a certain elevated temperature and solidify upon cooling.

Suitable polyamides are for example polyamide 6 (PA6), polyamide 66 (PA66), polyamide 66/6I, and polyamide 6I, and mixtures thereof.

The thermoplastic polyamide PA66 may have a number average molecular weight (Mn) in the range of 18000-24000 g mol$^{-1}$, preferably 19000-20000 g mol$^{-1}$ and/or a weight average molecular weight (Mw) in the range of 35000-50000 g mol$^{-1}$, preferably 38500-41000 g mol$^{-1}$.

The thermoplastic polyamide PA66/6I may have a number average molecular weight (Mn) in the range of 10000-14500 g mol$^{-1}$, preferably 12000-13000 g mol$^{-1}$ and/or a weight average molecular weight (Mw) in the range of 18000-34000 g mol$^{-1}$, preferably 24000-28000 g mol$^{-1}$.

The thermoplastic polyamide PA6I may have a number average molecular weight (Mn) in the range of 8000-13000 g mol$^{-1}$, preferably 10000-12000 g mol$^{-1}$ and/or a weight average molecular weight (Mw) in the range of 17500-27000 g mol$^{-1}$, preferably 20000-25000 g mol$^{-1}$.

The thermoplastic polyamide PA6 may have a number average molecular weight (Mn) in the range of 15000-20000 g mol$^{-1}$, preferably 17000-19000 g mol$^{-1}$ and/or a weight average molecular weight (Mw) in the range of 29000-38000 g mol$^{-1}$, preferably 33000-36000 g mol$^{-1}$.

The average molecular weights were determined according to ISO 16014-1.

It is preferred, that the polymer powder comprising a thermoplastic polyamide comprises the thermoplastic polyamide in an amount of more than 90 wt.-%, preferably in the range of 95 wt.-% to 100 wt.-%, more preferably consists of a thermoplastic polyamide.

In order to impregnate the nonwoven fabric comprising rCF with a polymer powder comprising a thermoplastic polyamide, the polymer powder comprising a thermoplastic polyamide is uniformly disposed on one, preferably both sides of the nonwoven fabric.

Techniques to dispose polymer powder are known in the state of the art.

Preferably the polymer powder comprising the thermoplastic polyamide is disposed on the nonwoven fabric comprising rCF at a temperature in the range of 150 °C to 350 °C, preferably 200 °C to 300 °C, more preferably at 225°C to 275 °C.

The amount of polymer powder comprising the thermoplastic polyamide disposed on the nonwoven fabric comprising rCF is preferably in the range of 30 wt.-% to 90 wt.-%, more preferably of 40 wt.-% to 80 wt.-% based on the total weight of the impregnated nonwoven fabric.

It is preferred, that the combined amount of polymer powder comprising the thermoplastic polyamide and nonwoven fabric comprising rCF is in the range of 90 wt.-% to 100 wt.-%, more preferably 95 wt.-% to 100 wt.-%, more preferably 98 wt.-% to 100 wt.-%, based on the total weight of the obtained semi-finished product.

Consolidation

Consolidation is the process of applying heat and pressure to a material or material composition.

By applying heat and pressure, the polymer powder comprising the thermoplastic polyamide melts and is pressed into the nonwoven fabric comprising rCF resulting in the recycled carbon fiber reinforced semi-finished product.

Consolidation methods are known in the art. In a preferred embodiment, a double belt press is used for the consolidation.

The amount of applied heat and pressure has to be sufficient to induce melting of the polymer powder comprising the thermoplastic polyamide.

Preferably, the consolidation is performed at a temperature in the range of 250°C to 310 °C and/or at a pressure in the range of 5 to 30 bar, more preferably 8 to 20 bar.

During the consolidation, the polymer powder comprising the thermoplastic polyamide is transformed into the thermoplastic matrix of the recycled carbon fiber reinforced semi-finished product.

Complete impregnation of the nonwoven fabric comprising rCF with a thermoplastic polyamide can be achieved by the inventive process as described above.

Semi-finished product

The invention further relates to a recycled carbon fiber-reinforced semi-finished product that is obtained by the inventive process as described above, characterized in that the semi-finished product comprises a nonwoven fabric comprising recycled carbon fibers, as described above, and a polymer matrix comprising a thermoplastic polyamide, as described above.

The average fiber volume fraction (aFVF) of the recycled carbon fiber-reinforced semi-finished product is in the range of 5 to 50 vol.-%, more preferably of 10 to 40 vol.-%, even more preferably of 17 to 30 vol.-% based on the total volume of the recycled carbon fiber-reinforced semi-finished product.

In order to determine the average fiber volume fraction (aFVF) multiple samples n are taken from different points of the semi-finished product and the fiber volume fraction of each sample measured. In order to obtain representative samples, the point from which each sample is taken should be at least 5 cm apart. In the measuring method used in the present invention, the points are between 5 and 20 cm apart from each other.

Techniques to determine the fiber volume fraction of fiber-reinforced materials are known in the state of the art.

One way to determine the fiber volume fraction is to remove the polymeric matrix from the samples by thermal or chemical treatment according to DIN EN 2564 or DIN 16459. The remaining fibers are then washed, dried, and weighed. Knowing the initial weight and volume of the semi-finished product as well as the density of the fiber, the volume fraction of the fiber can be determined.

The average fiber volume fraction (aFVF) can then be calculated according to the following formula (i):

$$aFVF = \frac{\sum_1^n FVF_n}{n} \qquad (i),$$

wherein n is the number of samples taken and is $\geq 2$, preferably $\geq 4$, and $FVF_n$ is the fiber volume fraction of each sample n.

The inventive process as described above can be utilized to obtain highly homogenous recycled carbon fiber reinforced semi-finished products.

According to this disclosure, the homogeneity of a rCF reinforced semi-finished product corresponds to the difference in fiber volume fraction (ΔFVF) between the measured fiber volume fraction of any of the samples n ($FVF_n$) and the average fiber volume fraction (aFVF) of the semi-finished product.

The difference in fiber volume fraction (ΔFVF) can be calculated according to the following equation (ii):

$$\Delta \mathrm{FVF} = FVF_n - aFVF \quad \text{(ii)}.$$

According to the present invention, the ΔFVF for any sample n is $\leq \pm 3$ vol.-%, preferably $\leq \pm 2$ vol.-%, more preferably $\leq \pm 1.5$ vol. %.

This small fluctuation in fiber volume fraction shows the improved homogeneity of the inventive recycled carbon fiber-reinforced semi-finished product compared to other mixing and infiltration technologies known in the art.

Composite

The recycled carbon fiber-reinforced semi-finished product of the present invention can be processed into a composite.

The inventive process to obtain a composite comprises the following steps

I) providing a recycled carbon fiber-reinforced semi-finished product as described above or obtained by any of the processes as described above;
II) heating the recycled carbon fiber-reinforced semi-finished product; and
III) forming the heated recycled carbon fiber-reinforced semi-finished product into a composite.

The heating in step II) can be done by any known method in the art. In a preferred embodiment, the recycled carbon fiber-reinforced semi-finished product is heated in a convection or infrared oven.

Because of the complete impregnation of the nonwoven fabric comprising rCF with the thermoplastic polyamide as described above, the heating of the recycled carbon fiber-reinforced semi-finished product in step II) can be performed below the melting point of the thermoplastic polyamide, thereby reducing the amount of oxidation of the polymer caused by lofting of the nonwoven fabric.

Preferably, the heating in step II) is performed at a temperature below the melting point of the thermoplastic polyamide, more preferably in the range of 150 °C to 300 °C, even more preferably in the range of 200°C to 250°C.

Forming of composites is known in the art. In a preferred embodiment, the composite is formed by a heat press, wherein the semi-finished product is inserted into a heated tooling.

Preferably, the forming in step III) is performed in a tooling having a temperature in the range of 50°C to 150°C, preferably 60°C to 120°C.

Lastly, the invention relates to a composite, characterized in that the composite comprises the recycled carbon fiber-reinforced semi-finished product comprising a nonwoven fabric comprising recycled carbon fibers and a thermoplastic matrix comprising a thermoplastic polyamide that is preferably obtained by or according to any of the processes as described above or below.

The composite can be further functionalized by any known method. Examples for a suitable method is the injection molding process.

**Experimental procedure**

Recycled carbon fiber-reinforced semi-finished product

80 g of a PA66 polyamide (Mw: 8000 g mol$^{-1}$) powder having a maximum grain size of < 600 $\mu$m (D 99.9%) was uniformly disposed per m$^2$ on each side (total of 160 g m$^{-2}$) of a recycled carbon fiber nonwoven fabric having a basis weight of 100 g m$^{-2}$, at 250 °C and 0.5 bar with an application rate of 2 m/min. Afterwards, the nonwoven fabric was consolidated in a double belt press at 280 °C and 15 bar at a rate of 0.5 m min$^{-1}$. The resulting rCF reinforced semi-finished product in form of an organo sheet had a basis weight of 260 g m$^{-2}$ and an average fiber volume fraction (aFVF) of 22.67 vol.-%.

6 10 mm x 20 mm samples were taken from points between 5 cm and 20 cm apart from each other of the rCF reinforced semi-finished and the fiber volume fraction determined after removal of the polymer matrix.

*Table 1: Result of the fiber volume fraction measurements of samples 1 to 6.*

| Sample n | Fiber volume fraction (FVF) [vol.-%] |
|---|---|
| Sample 1 | 23.36 |
| Sample 2 | 22.25 |
| Sample 3 | 21.50 |

(continued)

| Sample n | Fiber volume fraction (FVF) [vol.-%] |
|----------|--------------------------------------|
| Sample 4 | 22.52 |
| Sample 5 | 23.74 |
| Sample 6 | 22.65 |

The maximum difference in fiber volume fraction ($\Delta$FVF) can be found in sample 3 having a $FVF_3$ of 21.50 vol.-%. This leads to the difference in fiber volume fraction ($\Delta$FVF) between the $FVF_3$ and the aFVF of -1.17 vol.-%.

Accordingly, the obtained semi-finished product is highly homogenous compared to other mixing and infiltration technologies.

Composite

The rCF reinforced semi-finished product was heated to 225 °C in an infrared oven for 6 minutes. Afterwards, the heated rCF reinforced semi-finished product was placed into a heated tooling and formed into a composite with a heat press at 80 °C.

**Claims**

1. A process for obtaining a recycled carbon fiber-reinforced semi-finished product, **characterized in that** the process comprises the following steps

   a) providing a nonwoven fabric comprising recycled carbon fibers;
   b) uniformly disposing a polymer powder comprising a thermoplastic polyamide onto the nonwoven fabric comprising recycled carbon fibers; and
   c) consolidating the nonwoven fabric obtained in step b) to obtain a fiber-reinforced semi-finished product

   **characterized in that** the consolidation in step c) is performed at a temperature in the range of 230 °C to 330 °C and at a pressure in the range of 5 to 60 bar.

2. The process according to claim 1, **characterized in that** the nonwoven fabric comprising recycled carbon fibers has a basis weight in the range of 50 to 200 g m$^{-2}$, preferably of 75 to 150 g m$^{-2}$, more preferably of 90 to 110 g m$^{-2}$ and/or that the nonwoven fabric comprises recycled carbon fibers in an amount in the range of 80 to 100 wt.-%, preferably 90 to 100 wt.-%, more preferably 98 to 100 wt.-% based on the total weight of the nonwoven fabric and/or that the recycled carbon fibers are discontinuous carbon fibers with a length in the range of 20 mm to 180 mm, preferably 25 mm to 150 mm, more preferably 30 mm to 100 mm.

3. The process according to any of the preceding claims, **characterized in that** the polymer powder comprising a thermoplastic polyamide comprises a polyamide selected from the list consisting of polyamide (PA6), polyamide 66 (PA66), polyamide 6I, polyamide 66/6I, and mixtures thereof; and/or that the maximum grain size of the polymer powder comprising a thermoplastic polyamide is in the range of 1 $\mu$m to 1000 $\mu$m, preferably of 10 $\mu$m to 600 $\mu$m; and/or that the amount of polymer powder comprising a thermoplastic polyamide disposed in step b) is in the range of 30 wt.-% to 90 wt.-%, preferably of 40 wt.-% to 80 wt.-% based on total weight of the obtained semi-finished product.

4. The process according to any of the preceding claims, **characterized in that** the weight ratio of the polymer powder comprising a thermoplastic polyamide to the nonwoven fabric comprising recycled carbon fibers is in the range of 0.5 to 5, preferably 0.7 to 3, more preferably 0.8 to 2, and/or the combined amount of polymer powder comprising the thermoplastic polyamide and nonwoven fabric comprising rCF is in the range of 90 wt.-% to 100 wt.-%, more preferably 95 wt.-% to 100 wt.-%, more preferably 98 wt.-% to 100 wt.-%, based on the total weight of the obtained semi-finished product.

5. The process according to any of the preceding claims, **characterized in that** in step b) the polymer powder comprising a thermoplastic polyamide is uniformly disposed on each side of the nonwoven fabric and/or is disposed at a temperature in the range of 150 °C to 350 °C, preferably 200 °C to 300 °C, more preferably at 225 °C to 275 °C.

6. The process according to any of the preceding claims, **characterized in that** the consolidation in step c) is performed at a temperature in the range of 250 °C to 310 °C and/or at a pressure in the range of 5 to 30 bar, preferably 8 to 20 bar, and/or is performed in a double belt press.

7. A recycled carbon fiber-reinforced semi-finished product obtained by a process according to any of claims 1 to 6, the recycled carbon fiber-reinforced semi-finished product comprising a nonwoven fabric comprising recycled carbon fibers, and a thermoplastic matrix comprising a thermoplastic polyamide, **characterized in that** the semi-finished product has

   - an average fiber volume fraction (aFVF) in the range of 5 to 50 vol.-%, preferably 10 to 40 vol.-%, more preferably of 17 to 30 vol.-% based on the total volume of the recycled carbon fiber-reinforced semi-finished product, obtained by determining the fiber volume fraction of n 10 mm x 20 mm samples taken from points at least 5 cm and at most 20 cm apart from each other in the recycled carbon fiber-reinforced semi-finished product and calculating the average fiber volume fraction (aFVF) according to the following formula (i):

$$aFVF = \frac{\sum_1^n FVF_n}{n} \qquad (i),$$

   wherein n is the number of samples taken and n is $\geq 2$, preferably $\geq 4$, and $FVF_n$ is the fiber volume fraction of each sample n, and
   - a difference in fiber volume fraction ($\Delta FVF$) between any of the measured samples n ($FVF_n$) and the average fiber volume fraction (aFVF) calculated according to the following equation (ii):

$$\Delta FVF = FVF_n - aFVF \quad (ii)$$

   of $\leq \pm 3$ vol.-%, preferably $\leq \pm 2$ vol.-%, more preferably $\leq \pm 1.5$ vol.-%.

8. The recycled carbon fiber reinforced semi-finished product according to claim 7, **characterized in that** the nonwoven fabric comprises recycled carbon fibers in an amount in the range of 80 to 100 wt.-%, preferably 90 to 100 wt. %, more preferably 98 to 100 wt.-% based on the total weight of the nonwoven fabric and/or **in that** the recycled carbon fibers are discontinuous carbon fibers with a length in the range of 20 mm to 180 mm, preferably 25 mm to 150 mm, more preferably 30 to 100 mm.

9. The recycled carbon fiber reinforced semi-finished product according to claims 7 or 8, **characterized in that** the polymer matrix comprising a thermoplastic polyamide comprises a polyamide selected from the list consisting of polyamide (PA6), polyamide 66 (PA66), polyamide 6I, polyamide 66/6I, and mixtures thereof; and/or that the amount of polymer matrix comprising a thermoplastic polyamide is in the range of 30 wt.-% to 90 wt.-%, preferably of 40 wt.-% to 80 wt.-% based on total weight of the semi-finished product; and/or that the weight ratio of the polymer matrix comprising a thermoplastic polyamide to the nonwoven fabric comprising recycled carbon fibers is in the range of 0.5 to 5, preferably 0.7 to 3, more preferably 0.8 to 2, and/or that the combined amount of polymer matrix comprising the thermoplastic polyamide and nonwoven fabric comprising rCF is in the range of 90 wt.-% to 100 wt.-%, more preferably 95 wt.-% to 100 wt.-%, more preferably 98 wt.-% to 100 wt.-%, based on the total weight of the semi-finished product.

10. A process for obtaining a composite, **characterized in that** the process comprises the following steps:

   I) providing a recycled carbon fiber-reinforced semi-finished product obtained by or according to any of the preceding claims;
   II) heating the recycled carbon fiber-reinforced semi-finished product; and
   III) forming the heated recycled carbon fiber-reinforced semi-finished product into a composite.

11. The process for obtaining a composite according to claim 10, **characterized in that** the heating in step II) is performed at a temperature below the melting point of the thermoplastic polyamide, preferably in the range of 150 °C to 300 °C, more preferably in the range of 200 °C to 250 °C.

12. The process for obtaining a composite according to claims 10 or 11, **characterized in that** the forming in step III) is performed in a heated tooling having a temperature in the range of 50 °C to 150 °C, preferably 60 °C to 120 °C.

13. A composite, **characterized in that** the composite comprises the recycled carbon fiber-reinforced semi-finished product according to any of claims 7 to 10.

14. The composite according to claim 13, **characterized in that** the composite is obtained by the process according to any of claims 10 to 12.

**Patentansprüche**

1. Ein Verfahren zur Herstellung eines mit recycelten Kohlenstofffasern verstärkten Halbzeugs, **dadurch gekennzeichnet, dass** das Verfahren die folgenden Schritte umfasst

   a) Bereitstellen eines Vliesstoffs, der recycelte Kohlenstofffasern umfasst;
   b) gleichmäßiges Aufbringen eines Polymerpulvers, das ein thermoplastisches Polyamid umfasst, auf den Vliesstoff, der recycelte Kohlenstofffasern umfasst; und
   c) Konsolidieren des in Schritt b) erhaltenen Vliesstoffs, um ein faserverstärktes Halbzeug zu erhalten,

   **dadurch gekennzeichnet, dass** das Konsolidieren in Schritt c) bei einer Temperatur im Bereich von 230 °C bis 330 °C und bei einem Druck im Bereich von 5 bis 60 bar durchgeführt wird.

2. Das Verfahren nach Anspruch 1, **dadurch gekennzeichnet, dass** der Vliesstoff, der recycelte Kohlenstofffasern umfasst, ein Flächengewicht im Bereich von 50 bis 200 g m$^{-2}$, vorzugsweise von 75 bis 150 g m$^{-2}$, noch bevorzugter von 90 bis 110 g m$^{-2}$, hat und/oder dass der Vliesstoff recycelte Kohlenstofffasern in einer Menge im Bereich von 80 bis 100 Gew.-% vorzugsweise 90 bis 100 Gew.-%, noch bevorzugter 98 bis 100 Gew.-%, bezogen auf das Gesamtgewicht des Vliesstoffs, umfasst, und/oder dass die recycelten Kohlenstofffasern diskontinuierliche Kohlenstofffasern mit einer Länge im Bereich von 20 mm bis 180 mm, vorzugsweise 25 mm bis 150 mm, noch bevorzugter 30 mm bis 100 mm, sind.

3. Das Verfahren nach einem der vorstehenden Ansprüche, **dadurch gekennzeichnet, dass** das Polymerpulver, das ein thermoplastisches Polyamid umfasst, ein Polyamid umfasst, das ausgewählt ist aus der Liste bestehend aus Polyamid (PA6), Polyamid 66 (PA66), Polyamid 6I, Polyamid 66/6I und Mischungen davon; und/oder dass die maximale Korngröße des ein thermoplastisches Polyamid umfassenden Polymerpulvers im Bereich von 1 μm bis 1000 μm, vorzugsweise von 10 μm bis 600 μm, liegt; und/oder dass die Menge an Polymerpulver, das ein thermoplastisches Polyamid umfasst und in Schritt b) eingebracht wird, im Bereich von 30 Gew.-% bis 90 Gew.-%, vorzugsweise von 40 Gew.-% bis 80 Gew.-%, bezogen auf das Gesamtgewicht des erhaltenen Halbzeugs, liegt.

4. Das Verfahren nach einem der vorstehenden Ansprüche, **dadurch gekennzeichnet, dass** das Gewichtsverhältnis des Polymerpulvers, das ein thermoplastisches Polyamid umfasst, zu dem Vliesstoff, der recycelte Kohlenstofffasern umfasst, im Bereich von 0,5 bis 5, vorzugsweise von 0,7 bis 3, noch bevorzugter von 0,8 bis 2 liegt, und/oder die Gesamtmenge an Polymerpulver, das das thermoplastische Polyamid umfasst, und Vliesstoff, der rCF umfasst, im Bereich von 90 Gew.-% bis 100 Gew.-%, vorzugsweise 95 Gew.-% bis 100 Gew.-%, noch bevorzugter 98 Gew.-% bis 100 Gew.-%, bezogen auf das Gesamtgewicht des erhaltenen Halbzeugs, liegt.

5. Das Verfahren nach einem der vorstehenden Ansprüche, **dadurch gekennzeichnet, dass** in Schritt b) das Polymerpulver, das ein thermoplastisches Polyamid umfasst, gleichmäßig auf jeder Seite des Vliesstoffs aufgebracht wird und/oder bei einer Temperatur im Bereich von 150 °C bis 350 °C, vorzugsweise 200 °C bis 300 °C, noch bevorzugter bei 225 °C bis 275 °C aufgebracht wird.

6. Das Verfahren nach einem der vorstehenden Ansprüche, **dadurch gekennzeichnet, dass** das Konsolidieren in Schritt c) bei einer Temperatur im Bereich von 250 °C bis 310 °C und/oder bei einem Druck im Bereich von 5 bis 30 bar, vorzugsweise 8 bis 20 bar, und/oder in einer Doppelbandpresse durchgeführt wird.

7. Ein mit recycelten Kohlenstofffasern verstärktes Halbzeug, hergestellt in einem Verfahren nach einem der Ansprüche 1 bis 6, wobei das mit recycelten Kohlenstofffasern verstärkte Halbzeug ein Vliesstoff aus recycelten Kohlenstofffasern und eine thermoplastische Matrix aus einem thermoplastischen Polyamid umfasst, **dadurch gekennzeichnet, dass** das Halbzeug

   - einen durchschnittlichen Faser-Volumenanteil (aFVF) im Bereich von 5 bis 50 Vol.-%, vorzugsweise 10 bis 40 Vol.-%, noch bevorzugter von 17 bis 30 Vol.-% bezogen auf das Gesamtvolumen des mit recycelten Kohlenstofffasern verstärkten Halbzeugs, erhalten durch Bestimmung des Faser-Volumenanteils von n 10 mm x 20 mm großen Proben, die an Punkten entnommen wurden, die mindestens 5 cm und höchstens 20 cm voneinander entfernt im mit recycelten Kohlenstofffasern verstärkten Halbzeug liegen, und Berechnung des durchschnittlichen Faser-Volumenanteils (aFVF) gemäß der folgenden Formel (i):

$$aFVF = \frac{\sum_1^n FVF_n}{n} \qquad (i),$$

wobei n die Anzahl der entnommenen Proben ist und $n \geq 2$, vorzugsweise $\geq 4$, ist, und $FVF_n$ der Faser-Volumenanteil jeder Probe n ist, und
- eine Differenz im Faser-Volumenanteil (ΔFVF) zwischen einer der gemessenen Proben n ($FVF_n$) und dem durchschnittlichen Faser-Volumenanteil (aFVF) berechnet gemäß der folgenden Gleichung (ii):

$$\Delta\text{FVF} = FVF_n - aFVF \quad (ii)$$

von $\leq \pm 3$ Vol.-%, vorzugsweise $\leq \pm 2$ Vol.-%, noch bevorzugter $\leq +1,5$ Vol.-%, hat.

8. Das mit recycelten Kohlenstofffasern verstärkte Halbzeug gemäß Anspruch 7, **dadurch gekennzeichnet, dass** der Vliesstoff die recycelten Kohlenstofffasern in einer Menge im Bereich von 80 bis 100 Gew.-%, vorzugsweise 90 bis 100 Gew.-%, noch bevorzugter 98 bis 100 Gew.-%, bezogen auf das Gesamtgewicht des Vliesstoffs, umfasst und/oder dadurch, dass die recycelten Kohlenstofffasern diskontinuierliche Kohlenstofffasern mit einer Länge im Bereich von 20 mm bis 180 mm, vorzugsweise 25 mm bis 150 mm, noch bevorzugter 30 bis 100 mm, sind.

9. Das mit recycelten Kohlenstofffasern verstärkte Halbzeug gemäß den Ansprüchen 7 oder 8, **dadurch gekennzeichnet, dass** die Polymermatrix, die ein thermoplastisches Polyamid umfasst, ein Polyamid umfasst, das ausgewählt ist aus der Liste bestehend aus Polyamid (PA6), Polyamid 66 (PA66), Polyamid 6I, Polyamid 66/6I und Mischungen davon; und/oder dass die Menge der Polymermatrix, die ein thermoplastisches Polyamid umfasst, im Bereich von 30 Gew.-% bis 90 Gew.-%, vorzugsweise von 40 Gew.-% bis 80 Gew.-%, bezogen auf das Gesamtgewicht des Halbzeugs, liegt; und/oder dass das Gewichtsverhältnis der Polymermatrix, die ein thermoplastisches Polyamid umfasst, zu dem Vliesstoff, der recycelte Kohlenstofffasern umfasst, im Bereich von 0,5 bis 5, vorzugsweise 0,7 bis 3, noch bevorzugter 0,8 bis 2 liegt, und/oder dass die kombinierte Menge an Polymermatrix, die das thermoplastische Polyamid umfasst, und Vliesstoff, der rCF umfasst, im Bereich von 90 Gew.-% bis 100 Gew.-%, vorzugsweise 95 Gew.-% bis 100 Gew.-%, noch bevorzugter 98 Gew.-% bis 100 Gew.-%, bezogen auf das Gesamtgewicht des Halbzeugs, liegt.

10. Ein Verfahren zur Herstellung eines Verbundwerkstoffs, **dadurch gekennzeichnet, dass** das Verfahren die folgenden Schritte umfasst:

I) Bereitstellen eines mit recycelten Kohlenstofffasern verstärkten Halbzeugs, das hergestellt nach oder gemäß einem der vorstehenden Ansprüche ist;
II) Erwärmen des mit recycelten Kohlenstofffasern verstärkten Halbzeugs; und
III) Formen des erwärmten, mit recycelten Kohlestofffasern verstärkten Halbzeugs zu einem Verbundwerkstoff.

11. Das Verfahren zur Herstellung eines Verbundwerkstoffs gemäß Anspruch 10, **dadurch gekennzeichnet, dass** das Erwärmen in Schritt II) bei einer Temperatur unterhalb des Schmelzpunkts des thermoplastischen Polyamids durchgeführt wird, vorzugsweise im Bereich von 150 °C bis 300 °C, noch bevorzugter im Bereich von 200 °C bis 250 °C.

12. Das Verfahren zur Herstellung eines Verbundwerkstoffs gemäß Anspruch 10 oder 11, **dadurch gekennzeichnet, dass** das Formen in Schritt III) in einer beheizten Formvorrichtung mit einer Temperatur im Bereich von 50 °C bis 150 °C, vorzugsweise von 60 °C bis 120 °C, durchgeführt wird.

13. Ein Verbundwerkstoff, **dadurch gekennzeichnet, dass** der Verbundwerkstoff das mit recycelten Kohlenstofffasern verstärkte Halbzeug gemäß einem der Ansprüche 7 bis 10 umfasst.

14. Der Verbundwerkstoff nach Anspruch 13, **dadurch gekennzeichnet, dass** der Verbundwerkstoff durch das Verfahren nach einem der Ansprüche 10 bis 12 erhalten wird.

**Revendications**

1. Processus d'obtention d'un produit semi-fini renforcé de fibres de carbone recyclées, **caractérisé en ce que** le processus comprend les étapes suivantes

   a) fournir un textile non-tissé comprenant des fibres de carbone recyclées ;
   b) disposer uniformément une poudre polymère comprenant un polyamide thermoplastique sur le textile non-tissé comprenant des fibres de carbone recyclées ; et
   c) consolider le textile non-tissé obtenu à l'étape b) pour obtenir un produit semi-fini renforcé de fibres

   **caractérisé en ce que** la consolidation à l'étape c) est réalisée à une température dans la plage de 230 °C à 330 °C et à une pression dans la plage de 5 à 60 bar.

2. Processus selon la revendication 1, **caractérisé en ce que** le textile non-tissé comprenant des fibres de carbone recyclées présente une masse surfacique dans la plage de 50 à 200 gm$^{-2}$, de préférence de 75 à 150 gm$^{-2}$, plus préférentiellement de 90 à 110 gm$^{-2}$ et/ou **en ce que** le textile non-tissé comprend des fibres de carbone recyclées en une quantité dans la plage de 80 à 100 % en poids, de préférence de 90 à 100 % en poids, plus préférentiellement de 98 à 100 % en poids par rapport au poids total du textile non-tissé et/ou **en ce que** les fibres de carbone recyclées sont des fibres de carbone discontinues d'une longueur dans la plage de 20 mm à 180 mm, de préférence de 25 mm à 150 mm, plus préférentiellement de 30 mm à 100 mm.

3. Processus selon l'une quelconque des revendications précédentes, **caractérisé en ce que** la poudre polymère comprenant un polyamide thermoplastique comprend un polyamide sélectionné dans la liste consistant en polyamide (PA6), polyamide 66 (PA66), polyamide 6I, polyamide 66/6I et des mélanges de ceux-ci ; et/ou **en ce que** la granulométrie maximale de la poudre polymère comprenant un polyamide thermoplastique se situe dans la plage de 1 $\mu$m à 1000 $\mu$m, de préférence de 10 $\mu$m à 600 $\mu$m ; et/ou **en ce que** la quantité de poudre polymère comprenant un polyamide thermoplastique disposé à l'étape b) se situe dans la plage de 30 % en poids à 90 % en poids, de préférence de 40 % en poids à 80 % en poids par rapport au poids total du produit semi-fini obtenu.

4. Processus selon l'une des revendications précédentes, **caractérisé en ce que** le rapport pondéral de la poudre polymère comprenant un polyamide thermoplastique au textile non-tissé comprenant des fibres de carbone recyclées se situe dans la plage de 0,5 à 5, de préférence de 0,7 à 3, plus préférentiellement de 0,8 à 2, et/ou la quantité combinée de poudre polymère comprenant le polyamide thermoplastique et de textile non-tissé comprenant des rCF se situe dans la plage de 90 % en poids à 100 % en poids, plus préférentiellement de 95 % en poids à 100 % en poids, plus préférentiellement de 98 % en poids à 100 % en poids par rapport au poids total du produit semi-fini obtenu.

5. Processus selon l'une des revendications précédentes, **caractérisé en ce qu'**à l'étape b), la poudre polymère comprenant un polyamide thermoplastique est disposée uniformément de chaque côté du textile non-tissé et/ou est disposée à une température dans la plage de 150 °C à 350 °C, de préférence de 200 °C à 300 °C, plus préférentiellement de 225 °C à 275 °C.

6. Processus selon l'une des revendications précédentes, **caractérisé en ce que** la consolidation à l'étape c) est réalisée à une température dans la plage de 250 °C à 310 °C et/ou à une pression dans la plage de 5 à 30 bar, de préférence de 8 à 20 bar, et/ou est réalisée dans une presse à double bande.

7. Produit semi-fini renforcé de fibres de carbone recyclées obtenu par un processus selon l'une des revendications 1 à 6, le produit semi-fini renforcé de fibres de carbone recyclées comprenant un textile non-tissé comprenant des fibres de carbone recyclées, et une matrice thermoplastique comprenant un polyamide thermoplastique, **caractérisé en ce que** le produit semi-fini présente

   - une fraction volumique moyenne de fibres (aFVF) dans la plage de 5 à 50 % en volume, de préférence de 10 à 40 % en volume, plus préférentiellement de 17 à 30 % en volume par rapport au volume total du produit semi-fini renforcé de fibres de carbone recyclées, obtenue en déterminant la fraction volumique de fibres de n échantillons de 10 mm x 20 mm prélevés en des points au moins 5 cm et au plus 20 cm les uns des autres dans le produit semi-fini renforcé de fibres de carbone recyclées et en calculant la fraction volumique moyenne de fibres (aFVF) selon la formule suivante (i) :

$$aFVF = \frac{\sum_1^n FVF_n}{n} \qquad (i),$$

dans lequel n est le nombre d'échantillons prélevés et n est $\geq 2$, de préférence $\geq 4$, et $FVF_n$ est la fraction volumique de fibres de chaque échantillon n, et

- une différence de fraction volumique de fibres ($\Delta$FVF) entre l'un quelconque des échantillons mesurés n ($FVF_n$) et la fraction volumique moyenne de fibres (aFVF) calculée selon l'équation suivante (ii) :

$$\Delta\text{FVF} = FVF_n - aFVF \quad (ii)$$

de $\leq \pm 3$ % en volume, de préférence $\leq \pm 2$ % en volume, plus préférentiellement $\leq \pm 1,5$ % en volume.

8. Produit semi-fini renforcé de fibres de carbone recyclées selon la revendication 7, **caractérisé en ce que** le textile non-tissé comprend des fibres de carbone recyclées en une quantité dans la plage de 80 à 100 % en poids, de préférence de 90 à 100 % en poids, plus préférentiellement de 98 à 100 % en poids par rapport au poids total du textile non-tissé et/ou **en ce que** les fibres de carbone recyclées sont des fibres de carbone discontinues d'une longueur dans la plage de 20 mm à 180 mm, de préférence de 25 mm à 150 mm, plus préférentiellement de 30 à 100 mm.

9. Produit semi-fini renforcé de fibres de carbone recyclées selon les revendications 7 ou 8, **caractérisé en ce que** la matrice polymère comprenant un polyamide thermoplastique comprend un polyamide sélectionné dans la liste consistant en polyamide (PA6), polyamide 66 (PA66), polyamide 6I, polyamide 66/6I et des mélanges de ceux-ci ; et/ou **en ce que** la quantité de matrice polymère comprenant un polyamide thermoplastique se situe dans la plage de 30 % en poids à 90 % en poids, de préférence de 40 % en poids à 80 % en poids par rapport au poids total du produit semi-fini ; et/ou **en ce que** le rapport pondéral de la matrice polymère comprenant un polyamide thermoplastique au textile non-tissé comprenant des fibres de carbone recyclées se situe dans la plage de 0,5 à 5, de préférence de 0,7 à 3, plus préférentiellement de 0,8 à 2, et/ou **en ce que** la quantité combinée de matrice polymère comprenant le polyamide thermoplastique et de textile non-tissé comprenant les rCF se situe dans la plage de 90 % en poids à 100 % en poids, plus préférentiellement de 95 % en poids à 100 % en poids, plus préférentiellement de 98 % en poids à 100 % en poids, par rapport au poids total du produit semi-fini.

10. Processus d'obtention d'un composite, **caractérisé en ce que** le processus comprend les étapes suivantes :

I) fournir un produit semi-fini renforcé de fibres de carbone recyclées obtenu par ou selon l'une quelconque des revendications précédentes ;
II) chauffer le produit semi-fini renforcé de fibres de carbone recyclées ; et
III) former le produit semi-fini renforcé de fibres de carbone recyclées chauffé en un composite.

11. Processus d'obtention d'un composite selon la revendication 10, **caractérisé en ce que** le chauffage à l'étape II) est réalisé à une température inférieure au point de fusion du polyamide thermoplastique, de préférence dans la plage de 150 °C à 300 °C, plus préférentiellement dans la plage de 200 °C à 250 °C.

12. Processus d'obtention d'un composite selon les revendications 10 ou 11, **caractérisé en ce que** la formation à l'étape III) est réalisée dans un outillage chauffé présentant une température dans la plage de 50 °C à 150 °C, de préférence de 60 °C à 120 °C.

13. Composite, **caractérisé en ce que** le composite comprend le produit semi-fini renforcé de fibres de carbone recyclées selon l'une des revendications 7 à 10.

14. Composite selon la revendication 13, **caractérisé en ce que** le composite est obtenu par le processus selon l'une quelconque des revendications 10 à 12.

**EP 4 442 880 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120077402 A1